# EUROPÄISCHE PATENTSCHRIFT

(11) **EP 2 513 007 B1**
(45) Veröffentlichungstag und Bekanntmachung des Hinweises auf die Patenterteilung: **04.12.2019**
(21) Anmeldenummer: 10781618.3
(22) Anmeldetag: 16.11.2010
(51) Int. Cl.: C04B 26/32, C04B 26/06, C04B 26/14, C04B 26/16, C04B 26/18, C04B 28/04, C04B 28/06, C04B 24/42

(54) **RADIKALISCH POLYMERISIERBARER BEFESTIGUNGSMÖRTEL MIT SILANZUSÄTZEN SOWIE VERWENDUNG DESSELBEN**
FREE-RADICALLY POLYMERISABLE FASTENING MORTAR HAVING SILANE ADDITIVES AND USE THEREOF
MORTIER DE FIXATION À POLYMÉRISATION RADICALAIRE CONTENANT DES ADDITIFS SILANE ET SON UTILISATION

(30) Priorität: 18.12.2009 DE 102009059210
(43) Veröffentlichungstag der Anmeldung: 24.10.2012
(73) Patentinhaber: fischerwerke GmbH & Co. KG, 72178 Waldachtal (DE)
(72) Erfinder: GRÜN, Jürgen, 79268 Bötzingen (DE); VOGEL, Martin, 79286 Glottertal (DE); SCHMIDT, Clemens, 79211 Denzlingen (DE); SCHLENK, Christian, 79211 Denzllingen (DE); WEINELT, Christian, 79111 Freiburg (DE)
(86) Internationale Anmeldenummer: PCT/EP2010/006980
(87) Internationale Veröffentlichungsnummer: WO 2011/072789

(56) Entgegenhaltungen:
- EP-A2- 0 199 671
- EP-A2- 0 431 302
- EP-A2- 0 776 748
- EP-A2- 2 248 781
- DE-A1- 2 811 475
- JP-A- 2003 253 238
- JP-A- 2005 095 723
- US-A1- 2006 135 656
- US-B1- 6 211 262

## Beschreibung

Die Erfindung betrifft die Verwendung gemäß den Verwendungsansprüchen eines zwei- oder mehrkomponentigen Befestigungsmörtels auf der Basis von (nach Initiation, beispielsweise mit einem Härter) radikalisch härtenden ungesättigten Reaktionsharzen zum Einmörteln von Verankerungsmitteln in Löcher oder Spalten und ein Verfahren zum Einmörteln von Verankerungselementen und Löchern oder Spalten, bei denen ein Befestigungsmörtel nach wie in einem der Verwendungsansprüche definiert zum Ein¬mörteln von Verankerungs¬mitteln verwendet wird, wobei der Befestigungsmörtel und ein Verankerungsmittel in ein Loch oder einen Spalt eingebracht werden und der Befestigungsmörtel zum Aushärten gebracht wird, sowie bestimmte Befestigungsmörtel für die genannten Zwecke als solche, jeweils wie in den unabhängigen und vorzugsweise abhängigen Ansprüchen definiert.

Es sind eine Reihe von Kunstmörtelsystemen auf Basis verschiedenster polymerbildender Komponenten bekannt, die, mal als Ein-, mal als Zwei- oder Mehrkomponentensysteme ausgebildet, dem Einmörteln von Verankerungsmitteln, wie Bolzen oder dergleichen, in Löchern, wie Bohrlöchern, oder Spalten, jeweils in festen Untergründen wie z.B. Mauerwerk oder Beton, dienen. An den Verankerungsmitteln können dann weitere Bauteile befestigt werden, beispielsweise Fassadenabdeckungen. Das Einmörteln der Verankerungsmittel beruht dabei zum einen auf Klebeeffekten im Sinne eines Stoffschlusses zwischen dem Kunstmörtel und einem Verankerungselement und/oder der benetzten Fläche des Loches oder Spaltes, zum anderen auf Formschluss, wie beispielsweise Hinterschneidungen durch Umgeben mittels des Kunstmörtels von vorspringenden oder einbuchtenden Abschnitten des Verankerungselements und/oder des Lochs oder Spaltes.

Ein Beispiel für besonders gut geeignete Systeme sind solche auf der Basis von ungesättigten Reaktionsharzen und geeigneten Härtern.

FIS V 360 S® (fischerwerke GmbH & Co. KG, Waldachtal, Deutschland) ist ein sehr erfolgreiches, auf dem Markt etabliertes Beispiel für ein zweikomponentiges Kunstmörtelsystem zum Einmörteln von Verankerungselementen auf der Basis eines ethoxylierten Bisphenol-A-dimethacrylates in Komponente A und von Dibenzoylperoxid als einem solchen Härter in einer räumlich getrennten Komponente B, daneben jeweils weiteren Bestandteilen in jeder Komponente.

Derartige Kunstmörtelsysteme zeigen sehr gute Eigenschaften zur Befestigung auch in feuchten und schmutzigen Löchern, doch erhöhen insbesondere neue Vorschriften die Anforderungen auch unter Bedingungen relativ großer Nässe und Restverschmutzung, wie beispielsweise analog in der Leitlinie von der European Organisation for Technical Approvals (EOTA) (2001): ETAG N° 001 Ausgabe November 2006, Leitlinie für die europäische technische Zulassung für Metalldübel zur Verankerung im Beton, Teil 5: Verbunddübel, Februar 2008, unter 5.1.2.1 (b) beschriebenen Bedingungen: Dort werden Versuche mit enger Abstützung im ungerissenen Beton C 20/25 beschrieben, unter Verwendung u.a. elektrischer Hammerbohrmaschinen. Der Einfluss der Bohrloch-Reinigungstechnik im feuchten Untergrund wird hierbei (für die nachfolgend beschriebene Erfindung) beispielsweise wie folgt geprüft, wobei der Beton im Bereich der Verankerung mit Wasser gesättigt sein muss, wenn das Loch gebohrt, gereinigt und das Verankerungselement eingesetzt wird:
1. Ein Loch mit einem Durchmesser von etwa 0.5 x d₀ (d₀ = zu prüfender Bohrlochdurchmesser) wird mit der zu prüfenden Verankerungstiefe im Betonuntergrund gebohrt.
2. Das Loch wird mit Wasser gefüllt und bleibt 8 Tage lang gefüllt, bis Wasser in einer Entfernung von 1,5 d bis 2 d von der Bohrlochachse aus in den Beton eingedrungen ist.
3. Das Wasser wird aus dem Bohrloch entfernt.
4. Das endgültige Loch wird mit dem zu prüfenden Durchmesser d₀ aufgebohrt.

Dann wird das Bohrloch mit der vom Hersteller gelieferten Handpumpe und Bürste gereinigt, wobei folgendes Vorgehen gewählt wird: 1 x ausblasen mit dem Handausbläser / 1x Ausbürsten mit der Handbürste /1 x ausblasen mit dem Handausbläser. Anschließend werden (beispielsweise im Versuch in den Beispielen für die nachfolgende Erfindung mittels einer 2-Komponenten-Kartusche mit Statikmischer) der Befestigungsmörtel und ein Verankerungselement M12 eingebracht.

Nach der vorgeschriebenen, temperaturabhängigen Mindestaushärtzeit werden dann Adhäsionsversagensversuche mit enger Abstützung, wie Sie in der europäische technischen Zulassung für Metalldübel zur Verankerung im Beton, Teil 5: Verbunddübel Ausgabe Februar 2008 unter 5.0 Bild 2 ausgeführt sind, durchgeführt, um die Adhäsionsversagenskraft der eingemörtelten Verankerungselemente zu ermitteln, beispielsweise im Rahmen der nachfolgenden Exemplifizierung oder für die allgemein unten beschriebene Erfindung wie folgt:
Die bekannten radikalisch härtenden ungesättigten Reaktionssysteme zeigen hierbei bereits sehr gute Adhäsionsversagenslasten, doch stellen die neuen Testsysteme und Verfahren weitere Herausforderungen, so dass eine Aufgabe darin besteht, auch unter diesen - schwierigen - Bedingungen noch bessere Eigenschaften, wie insbesondere weiter erhöhte Adhäsionsversagenslasten, zu erzielen.

US 2006/135656 nennt Epoxyharze mit Silanzusatz. EP 0431 302 nennt chemisch bereits an Füllstoffe gebundene und damit nicht mehr reaktive Silane. EP 0 199 671 nennt Verklebungsmittel, beinhaltet jedoch keinerlei Silane. JP 2005-095723, JP 2003-253238, US 6,211,262 und EP 0 776 748 beschreiben Beschichtungen oder Klebemittel für Elektronikbauteile, in denen Harze mit Silanzusätzen erwähnt werden.

Überraschend wurde nun gefunden, dass der Zusatz bestimmter Silane, die beispielsweise zur Teilnahme an der Polymerisierung mit einem Befestigungsmörtel auf Basis radikalisch härtender ungesättigter Reaktionsharze befähigte reaktive Gruppen aufweisen oder nicht und in jedem Falle Si-gebundene hydrolysierbare Gruppen aufweisen, derartige bekannte radikalisch härtende ungesättigte Reaktionsharze vorteilhaft beeinflusst, insbesondere höhere Adhäsionsversagenslasten ermöglicht.

Die Offenbarung betrifft daher in einer ersten Verkörperung für Referenzzwecke einen zwei-oder mehrkomponentigen Befestigungsmörtel auf der Basis von einem radikalisch härtenden ungesättigten Reaktionsharz zum Einmörteln von Verankerungsmitteln in Löcher oder Spalten, welcher dadurch gekennzeichnet ist, dass er (bereits vor dem Beginn der Härtungsreaktion) neben dem Reaktionsharz ein oder mehrere, keine oder mindestens eine Amino-, sek. Amino-, Mercapto-, Epoxy-, Isocyanato-, Alkenyl-, (Meth)acryloyl- und/oder Anhydrido-Gruppe, insbesondere (Meth)acryloylgruppen, beinhaltende, und zugleich mindestens eine Si-gebundene hydrolysierbare Gruppe beinhaltende Silane und räumlich getrennt (z.B. in einer zweiten Komponente) einen Härter beinhaltet, daneben gegebenenfalls weitere übliche Zusätze.

In einer Verkörperung (= Ausführungsform) betrifft die unter den Hauptanspruch fallende Erfindung die Verwendung eines zwei- oder mehrkomponentigen Befestigungsmörtels zum Befestigen von Verankerungsmitteln in Löchern oder Spalten, wobei der besagte Befestigungsmörtel auf der Basis von einem radikalisch härtenden ungesättigten Reaktionsharz beruht und (bereits vor dem Beginn der Härtungsreaktion) neben dem Reaktionsharz ein oder mehrere, keine oder mindestens eine Amino-, sek. Amino-, Mercapto-, Epoxy-, Isocyanato-, Alkenyl-, (Meth)acryloyl- und/oder Anhydrido-Gruppe , insbesondere (Meth)acryloylgruppen, beinhaltende, und zugleich mindestens eine Si-gebundene hydrolysierbare Gruppe beinhaltende Silane und räumlich getrennt (worunter vor- und nachstehende die radikalisch härtenden ungesättigten Reaktionsharze ohne oder mit ungesättigte Gruppen enthaltende reaktive Verdünner und ggf. ungesättigte Gruppen beinhaltende Silane zu verstehen sind) in einer zweiten Komponente einen Härter beinhaltet, daneben gegebenenfalls weitere übliche Zusätze, zum Einmörteln von Verankerungsmitteln in Löcher oder Spalten, wobei das besagte Kunstharzsystem und ein oder mehrere Verankerungsmittel nacheinander oder gleichzeitig in ein oder mehrere Löcher oder Spalten eingebracht werden und der Befestigungsmörtel (durch Mischung des Härters mit der oder den das radikalisch härtende Reaktionsharz enthaltenden Komponente(n)) zum Aushärten gebracht wird.

Auch entsprechende Verfahren zum Einmörteln von Verankerungselementen in Löchern oder Spalten, bei denen ein zwei- oder mehrkomponentiger Befestigungsmörtel zum Einmörteln von Verankerungsmitteln verwendet wird, wobei der zwei- oder mehrkomponentige Befestigungsmörtel auf der Basis von einem radikalisch härtenden ungesättigten Reaktionsharz beruht und (bereits vor dem Beginn der Härtungsreaktion) neben dem Reaktionsharz ein oder mehrere, keine oder mindestens eine Amino-, sek. Amino-, Mercapto-, Epoxy-, Isocyanato-, Alkenyl-, (Meth)acryloyl- und/oder Anhydrido-Gruppe , insbesondere (Meth)acryloylgruppen, beinhaltende, und zugleich mindestens eine Si-gebundene hydrolysierbare Gruppe beinhaltende Silane mit absoluten Molekulargewichten von 2000 oder kleiner, die zur Teilnahme an der Polymerisierung mit einem Kunstharz auf Basis radikalisch härtender ungesättigter Reaktionsharze befähigte reaktive Gruppen aufweisen oder nicht und räumlich getrennt in einer zweiten Komponente einen Härter beinhaltet, daneben gegebenenfalls weitere übliche Zusätze, wobei der Befestigungsmörtel und ein Verankerungsmittel nacheinander, insbesondere zuerst der zwei- oder mehrkomponentige Befestigungsmörtel, dann das Verankerungsmittel, oder gleichzeitig in ein Loch oder einen Spalt in einem Substrat eingebracht werden und der Befestigungsmörtel (durch Mischung des Härters mit der oder den das radikalisch härtende Reaktionsharz enthaltenden Komponente(n)) zum Aushärten gebracht wird, bilden eine Ausführungsform der Erfindung.

Möglicherweise bewirken die Silanzusätze, ohne durch diesen Erklärungsversuch abschließend gebunden sein zu wollen, einen besseren Kontakt zur benetzten Substratoberfläche im Loch oder Spalt, sei es im Form- und/oder im Stoffschluss.

Erstaunlich ist, dass auch hohe Anteile vom System nicht nur gut toleriert werden sondern sogar zu besonders effektiven erfindungsgemäßen Befestigungsmörteln führen können. Möglicherweise ist auch eine verbesserte interne Kohäsion der (beim Einmörteln von Verankerungssystemen eher dickschichtigen) resultierenden ausgehärteten Kunstmörtel gegeben, die ebenfalls zu den hohen Werten für Adhäsionsversagen beitragen dürfte. Dies ist ein besonders überraschender Aspekt der vorliegenden Erfindung.

Überraschenderweise zeigen sich auch besonders gute Eigenschaften der erfindungsgemäß verwendeten Befestigungsmörtel hinsichtlich der Leistungsfähigkeit in der Zugzone, also im gerissenen Beton. Auch andere mechanische Eigenschaften können positiv beeinflusst werden, wie beispielsweise die Maximalbruchdehnung und das Zugmodul. Völlig überraschend findet sich auch, beispielsweise bei Zwei-Kammer-Patronen mit den Komponenten des erfindungsgemäßen Befestigungsmörtels, eine verbesserte Lagerstabilität.

Bei den ausgehärteten Massen handelt es sich so bevorzugt um hochfeste, wenig flexible Festkörper mit einem Zugmodul > 0,5 GPa, bevorzugt > 1 GPa, einer Zugfestigkeit von> 1 MPa, bevorzugt > 5 MPa und einer Bruchdehnung < 10 %, bevorzugt < 5 %, insbesondere < 2 % (gemessen nach DIN EN ISO 527) und einer Druckfestigkeit von > 5 MPa, bevorzugt > 10 MPa, insbesondere > 20 MPa (gemessen nach DIN EN ISO 604).

Auch eine erhöhte Lagerstabilität wird gefunden, die wie in den Beispielen beschrieben ermittelt werden kann.

Schließlich kann auch eine gegenüber entsprechenden Kunstmörteln ohne Silanzusatz erhöhte Leistungsfähigkeit im gerissenen Beton gefunden werden nach den Verfahren gemäß den Leitlinien von der European Organisation for Technical Approvals (EOTA) (2001): ETAG N° 001 Ausgabe November 2006, Leitlinie für die europäische technische Zulassung für Metalldübel zur Verankerung im Beton, Teil 5: Verbunddübel, Februar 2008.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was zu besonderen Ausführungsformen der Erfindung führt.

Wo Gewichtsangaben in Prozent (Gew.-%) gemacht werden, beziehen sich diese, wenn nichts anderes gesagt ist, auf die Gesamtmasse der Reaktanden und Zusätze aller (im fertig formulierten Zustand flüssigen und pastösen) Komponenten des Befestigungsmörtels, also ohne Verpackung, d.h. die Masse der gesamten zugehörigen Reaktionsharzformulierung. Bei den ein oder mehreren, keine oder mindestens eine Amino-, sek. Amino-, Mercapto-, Epoxy-, Isocyanato-, Alkenyl-, (Meth)acryloyl- (bevorzugt) und/oder Anhydrido-Gruppe tragenden und mindestens eine Si-gebundene hydrolysierbare Gruppe beinhaltenden Silanen handelt es sich in besonderen Ausführungsformen der Erfindung um solche der Formel I,

[R₁-X-(CH₂)ₙ-]ₚ-Si(R^{B})_{q}(L)ₜ (I)

worin
X für S oder NH oder O oder NCO oder nichts steht; wobei X nichts ist (= fehlt), wenn R₁ für Anhydrido steht;
R₁ für nichts, Wasserstoff, Cycloalkyl, Alkyl, Aminoalkyl, Epoxyalkyl, (Meth)acryloyl (bevorzugt), Aryl, Aralkyl, Acyl, Heterocyclyl (insbesondere Anhydrido) oder für einen Rest der Formel -[(CH₂)_{n*}]_{p*}-Si(R^{B*})_{3-t*}(L*)_{t*} steht, worin, jeweils unabhängig vom anderen Rest, R^{B*} die nachfolgend für R^{B} genannten Bedeutungen , L* die nachfolgend für L genannten Bedeutungen und n*, p* und t* jeweils die nachfolgend genannten Bedeutungen haben; wobei R₁ Wasserstoff ist, wenn X für S steht; wobei X für O steht wenn R₁ Epoxyalkyl oder (Meth)acryloyl ist; wobei R₁ nichts ist, wenn X für NCO (= Isocyanato) steht;
R^{B} unabhängig voneinander für eine Alkyl-, Alkenyl-, Arylalkyl- oder Arylgruppe steht, vorzugsweise für Alkyl oder Alkenyl,
L für einen hydrolysierbaren Rest, insbesondere Alkoxy, steht,
n und, falls vorhanden, n* unabhängig voneinander für eine positive ganze Zahl, insbesondere 1 bis 10, stehen;
p für 0 bis 3 steht und, falls vorhanden, p* unabhängig für 1 bis 3 steht;
q für 0 bis 2 steht; und
t für 1 bis 4 steht und, falls vorhanden, t* unabhängig für 1 bis 3 steht,
mit der Maßgabe, dass gilt: p + q + t = 4 und, falls vorhanden, p* + (3-t*) + t* = 4.

In einer besonderen Ausführungsform der Erfindung können (mindestens auch) solche Silane verwendet werden, die den alpha-Effekt zeigen, also z.B. worin n und gegebenenfalls n* in obiger Formel I gleich 1 ist (n = 1 und ggf. n* = 1 in Formel I), z.B. 3-(Meth)acryloyl-oxy-methyltrialkoxy (wie trimethoxy) silane.

Weitere Silane mit hydrolysierbaren Gruppen können beinhaltet sein, beispielsweise (bezogen auf das Gesamtgewicht aller Silane) bis 80 Gew.-%, bis 70 Gew.-%, bis 60 Gew.-%, bis 50 Gew.-%, bis 40 Gew.-%, bis 30 Gew.-%, bis 20 Gew.-% oder bis 10 Gew.% - dies impliziert beispielsweise Alkoxysilanverbindungen oder Silan-Vernetzer, wie Vinylalkoxysilane, z.B. Vinyltrimethoxysilan oder Vinyltriethoxysilan oder Ester der (Poly)-Kieselsäure (wie z.B. Dynasilan® 40 (ein Ethylpolysilikat) oder Dynasylan® A, Evonik GmbH, Frankfurt am Main, Deutschland), oder Mischungen von zwei oder mehr davon.

Unter Epoxy- und/oder Isocyanatgruppen und/oder (Meth)acrylgruppen und/oder ferner Anhydrido-Gruppen, beinhaltenden und mindestens eine Si-gebundene hydrolysierbare Gruppe beinhaltenden Silanen sind insbesondere solche zu verstehen, die ein oder mehrere Gruppen ausgewählt aus Epoxy-, Isocyanat-, oder bevorzugt (Meth)acrylat- (worunter Acrylat- und/oder Methacrylat- zu verstehen ist) und (ferner) Anhydridogruppen und mindestens eine Si-gebundene hydrolysierbare Gruppen tragen, wie beispielsweise entsprechende bevorzugte Silane der Formel II,

[Y-(CH₂)ₐ-]-Si(R^{B})₃₋ₜ(L)ₜ (II)

worin
Y für (Meth)acryloyloxy oder (ferner) für Isocyanato (-N=C=O), für Epoxyalkoxy, oder für eine Anhydrido-Gruppe steht;
R^{B} unabhängig voneinander für eine Alkyl-, Arylalkyl- oder Arylgruppe steht, vorzugsweise für Alkyl,
L für einen hydrolysierbaren Rest, insbesondere Alkoxy, steht,
a für eine positive ganze Zahl, insbesondere 1 bis 10, vor allem 1 bis 3, steht; und
t für 1 bis 3 steht.

Besondere Ausführungsformen der Erfindung beziehen sich auf diejenigen Silane der Formel II, in denen Y für (Meth)acryloyloxy steht und die übrigen Symbole wie im vorstehenden Absatz definiert sind, da diese nicht nur untereinander, sondern auch mit den ungesättigten Gruppen der radikalisch härtenden ungesättigten Reaktionsharze polymerisieren können.

Weitere besondere Ausführungsformen der vorliegend offenbarten Erfindungsgegenstände beinhalten Silane der Formel III oder deren Verwendung,

Si(R^{B})₄₋ₜ(L)ₜ (III)

worin R^{B} unabhängig voneinander für eine Alkyl-, Alkenyl-, Arylalkyl- oder Arylgruppe steht, vorzugsweise für Alkyl oder Alkenyl,
L für einen hydrolysierbaren Rest, insbesondere Alkoxy, steht,
   und
t für 1 bis 4 steht.

Auch Gemische mit zwei oder mehr der in den beiden vorstehenden Absätzen genannten Silane der Formeln I, II und/oder III, oder jeweils deren Verwendungen, bilden besondere Varianten der erfindungsgemäßen Ausführungsformen.

Aryl ist innerhalb dieser Offenbarung stets vorzugsweise ein aromatischer Rest mit 6 bis 18 Kohlenstoffatomen, beispielsweise Phenyl, Naphthyl oder Toluyl.

Aralkyl ist innerhalb dieser Offenbarung stets Aryl wie zuvor definiert, welches an Alkyl wie vorstehend definiert gebunden ist, beispielsweise Benzyl oder Phenylethyl, kann aber bei Aufzählungen innerhalb dieser Offenbarung vorzugsweise weggelassen werden.

Cycloalkyl steht insbesondere für mono-, di- oder trizyklisches, vorzugsweise monozyklisches, Cycloalkyl mit 3 bis 20 Kohlenstoffatomen, vorzugsweise mit 3 bis 10 Kohlenstoffatomen, im Ring, insbesondere für Cyclopentyl oder Cyclohexyl.

Epoxyalkyl steht vorzugsweise für Alkyl wie oben definiert, das durch eine Epoxygruppe unter Ringbildung substituiert ist.

Epoxyalkyl (auch in Epoxyalkoxy) ist insbesondere Epoxy-C₁-C₇-alkyl, wie besonders vorzugsweise , wie insbesondere(2,3-Epoxy-propan-1-yl) der Formel 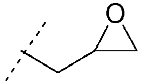 (die gestrichelte Linie markiert das Ende der Bindung zum Rest des Moleküls).

Acyl steht innerhalb dieser Offenbarung stets für einen Rest einer Carbonsäure oder einer Sulfonsäure, beispielsweise einen Aryl-, Alkyl- oder Aralkyl-carbonsäure- oder -sulfonsäureRest, wie C₁-C₇-Alkanoyl, z.B. Acetyl oder Propionyl, Aroyl (Aryl-C(=O)-), wie Benzoyl, oder dergleichen.

Alkyl (auch in Alk(yl)oxy) steht innerhalb dieser Offenbarung stets für insbesondere einen unverzweigten oder ein- oder mehrfach verzweigten Alkylrest mit beispielsweise 1 bis 20, vorzugsweise 1 bis 10 Kohlenstoffatomen, beispielsweise mit 1 bis 4 Kohlenstoffatomen, wie z.B. Methyl, Ethyl, n-Propyl, Isopropyl, n-Butyl, sek.-Butyl, Isobutyl oder tert-Butyl.

Alkenyl steht innerhalb dieser Offenbarung stets für insbesondere einen unverzweigten oder ein- oder mehrfach verzweigten Alkylrest, der eine oder mehrere Unsättigungen aufweist, mit beispielsweise 1 bis 20, vorzugsweise 1 bis 10 Kohlenstoffatomen, beispielsweise mit 1 bis 4 Kohlenstoffatomen, wie z.B. Vinyl oder Allyl.

Aminoalkyl steht für mit ein oder mehreren, insbesondere einer, Aminogruppe substituiertes Alkyl, wie gerade definiert.

Heterocyclyl bedeutet insbesondere einen mono- di- oder trizyklischen, insbesondere monozyklischen Rest 3 bis 20, vorzugsweise 3 bis 8 Ringatomen, von denen ein oder mehrere , insbesondere 2, als Heteroatome unabhängig voneinander ausgewählt aus N, O und S vorliegen, und kann durch ein oder mehrere Oxogruppen substituiert sein, insbesondere solche, die an Ringkohlenstoffatome gebunden sind, die über ein O-Heteroatom gebunden sind (was zu Anhydrido führt).

Unter Heterocyclyl fällt somit insbesondere auch Anhydrido, bei dem es sich um einen cyclischen Rest handelt, der folgendes ringschließendes Brückenelement enthält: -C(=O)-O-C(=O)-. Der Ring beinhaltet also eine Carbonsäureanhydridgruppe. Ein mögliches bevorzugtes Beispiel ist 2,5-Dioxo-oxolan-3-yl, ein anderes die entsprechende ungesättigte Variante 2,5-Dioxo-oxol- -3-yl mit Doppelbindung zwischen den C-Atomen in Stellung 3 und 4 des Rings, ein weiteres ein in 3,4-Stellung benzoannelierter 2,5-Dioxolan-3-ylrest.

Aromatisch (z.B. Aryl) bedeutet, dass die entsprechenden Verbindungen aromatische Reste mit 6 bis 18 Kohlenstoffresten enthalten, wie Phenylen, Naphthylen oder Fluorenylen, die unsubstituiert oder (beispielsweise mit ein oder mehreren, z.B. bis zu drei, C₁-C₇-Alkylreste, wie ein oder mehreren Methylgruppen) substituiert sein können. Bevorzugt als Aryl ist Phenyl, Naphthyl oder Toluyl.

Dass "X für nichts" steht oder X nichts ist oder dergleichen, bedeutet, dass der Rest "-X-" in der jeweiligen Formel für eine einfache Bindung steht. Dass R₁ "nichts" ist, bedeutet, dass der Rest R₁ fehlt.

"Falls vorhanden" bezieht sich darauf, dass ein Rest oder ein Symbol abhängig von anderen Definitionen vorhanden sein kann oder fehlen kann, beispielsweise darauf, dass im Falle, dass nur, wenn p in Formel I 1 bis 3 ist, und R₁ einen Rest der Formel -[(CH₂)_{n*}]_{p*}-Si(R^{B*})₃₋ₜ*(L*)_{t*} bedeutet, n*, p*, R^{B*}, L* und t* überhaupt vorhanden sein können.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

"Teilweise oder ausschließlich" bedeutet, dass die danach genannten Bestandteile neben anderen Bestandteilen der entsprechenden Komponente oder ausschließlich vorliegen können, beispielsweise (z.B. bei den Silanen oder radikalisch härtenden ungesättigten Reaktionsharzen als Komponenten) bezogen auf die jeweils definierte Komponente in Anteilen von 10, 20, 30, 40, 50, 60, 70 oder 80 bis 90 oder bis 100 Gew.-%.

Wo das Attribut "ferner" erwähnt wird, bedeutet dies, dass Merkmale ohne dieses Attribut stärker bevorzugt sein können.

(Meth)acryl steht für Acryl, Methacryl oder Acryl und Methacryl (als Gemisch).

Unter Si-gebundenen hydrolysierbaren Gruppen (in dieser Offenbarung auch mit L symbolisiert) sind beispielsweise Halogenatome (Halogen, wie Chloro), Ketoximato, Amino, Aminoxy, Mercapto, Acyloxy, Aryloxy, Aralkyloxy (= Arylalkoxy) oder insbesondere Alkyloxy (Alkoxy) zu verstehen.

Unter Si-gebundenen hydrolysierbaren Gruppen sind insbesondere solche Gruppen L zu verstehen, die Bestandteil einer Gruppe der Formel Z sind,

-Si(R^{B})₃₋ₜ(L)ₜ (Z)

worin R^{B} unabhängig voneinander für eine Alkyl-, Alkenyl-, Arylalkyl- oder Arylgruppe stehen kann, vorzugsweise für Alkyl,
t für eine ganze Zahl von 1 bis 3 steht und
L für eine Si-gebundene hydrolysierbare Gruppe, insbesondere Alkoxy, steht.

Das oder die erfindungsgemäß zugesetzten ein oder mehrere, keine oder mindestens eine Amino-, sek. Amino-, Mercapto-, Epoxy-, Isocyanato-, Alkenyl-, (Meth)acryloyl- und/oder Anhydrido-Gruppe, insbesondere (Meth)acryloylgruppen, beinhaltende(n), und zugleich mindestens eine Si-gebundene hydrolysierbare Gruppe beinhaltende Silan(e) haben absolute Molekulargewichte von 2000 oder kleiner, 1000 oder kleiner, 900 oder kleiner, 800 oder kleiner, 700 oder kleiner, 600 oder kleiner oder insbesondere 500 oder kleiner oder insbesondere 400 oder kleiner.

In besonderen Ausführungsformen der Erfindung dienen als (erfindungsgemäß zugesetzte) Silane der Formel I ein oder mehrere ausgewählt aus der Gruppe, die aus 3-Aminopropyltrialkoxysilanen, wie 3-Aminopropyl-trimethoxysilan oder 3-Aminopropyl-triethoxysilan, 3-Glycidyloxypropyltrialkoxysilanen, wie 3-Glycidyloxypropyltrimethoxysilan, Bis-(3-trialkoxy-silylpropyl)amin, wie Bis-(3-trimethoxysilylpropyl)amin oder Bis-(3-triethoxysilylpropyl)amin, N-(n-butyl)-3-aminopropyltrialkoxysilan, wie N-(Alkyl, wie n-butyl)-3-aminopropyltrimethoxy-silan oder N-(Alkyl, wie n-butyl)-3-aminopropyltriethoxysilan, 3-Mercaptopropyltrialkoxysilan, wie 3-Mercaptopropyltrimethoxysilan, und (als besondere Variante) 3-(Meth)acryloyl-oxypro-pyltrialkoxysilanen, wie 3-(Meth)acryloyl-oxypropyltrimethoxysilan oder-triethoxysilan oder 3-(Meth)acryloyl-oxymethyltrimethoxysilan oder -triethoxysilan, und/oder Alkenylalkoxysilane wie Vinyltrimethoxysilan oder Vinyltriethoxysilan, und/oder Tetraalkoxysilan, wie Tetraethoxysilan, Tetramethoxysilan oder Tetrapropoxysilan oder (bevorzugt oder ferner) Alkoxypolysilikat, wie Ethyl- oder Propylpolysilikat; oder Gemische von zwei oder mehr davon.

Die keine oder mindestens eine Amino-, sek. Amino-, Mercapto-, Epoxy-, Isocyanato-, Alkenyl-, (Meth)acryloyl- und/oder Anhydrido-Gruppe tragenden, und mindestens eine Si-gebundene hydrolysierbare Gruppe beinhaltenden Silane liegen in einem erfindungsgemäßen oder erfindungsgemäß zu verwendenden Befestigungsmörtel beispielsweise in einem Gewichtsanteil von 0,1 bis 25, insbesondere von 1 oder mehr Gew.-%, wie von 1 bis 20 Gew.-%, vorzugsweise von 2 oder mehr Gew.-%, wie von 2 bis 20 oder bis 15 Gew.-%, von 3 oder mehr Gew.-%, wie von 3 bis 20 oder bis 10 Gew.-%, noch stärker bevorzugt von 4 oder mehr Gew.-%, z.B. von 4 bis 20 oder bis 6 Gew.-%, vor.

Unter radikalisch härtenden ungesättigten Reaktionsharzen sind in erster Linie solche zu verstehen, die als radikalisch aushärtende (was "(z.B. vor Härterzugabe) aushärtbar einschließt) Komponenten organische Verbindungen mit ungesättigten (z.B. olefinischen) Resten beinhalten oder insbesondere daraus bestehen, insbesondere solche, die härtbare Ester mit ungesättigten Carbonsäureresten umfassen; z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate (einschließlich Hydroxypropyl(meth)acrylat, Hydroxyethyl(meth)acrylat, Ethylenglykoldi(meth)acrylat, Butandioldi(meth)acrylat, Hexandioldimethacrylat oder (vorzugsweise jeweils propoxyliertem oder insbesondere ethoxyliertem) aromatischem Diol-, wie Bisphenol-A-, Bisphenol-F- oder Novolak-(insbesondere di-) (meth)acrylat), Epoxy(meth)acrylate (insbesondere in Form insbesondere von Umsetzungsprodukten von Di- oder Polyepoxiden, z.B. Bisphenol-A-, Bisphenol-F- oder Novolak-di- und/ oder-poly-glycidylethern, mit ungesättigten Carbonsäuren, z.B. C₂-C₇-Alkencarbonsäuren, wie insbesondere (Meth)acrylsäure), Urethan- und/oder Harnstoff(meth)acrylate, und/oder ungesättigte Polyesterharze, oder dergleichen; oder ein Gemisch von zwei oder mehr dieser härtbaren ungesättigten organischen Komponenten.

Beispiele für in besonderen Ausführungsformen der Erfindung (auch erfindungsgemäßen Befestigungsmörteln als solchen) vorhandene bzw. bei erfindungsgemäßen Verwendungen verwendete Epoxy(meth)acrylate sind solche der Formel 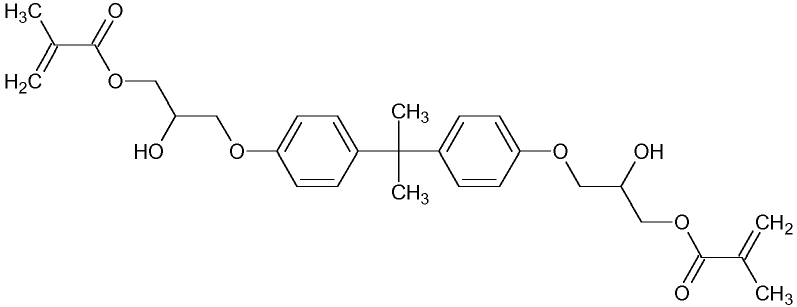 oder allgemeiner unter Berücksichtigung der Vorverlängerungsreaktion bei der Herstellung des Bisphenol-A-diglycidylethers der Formel 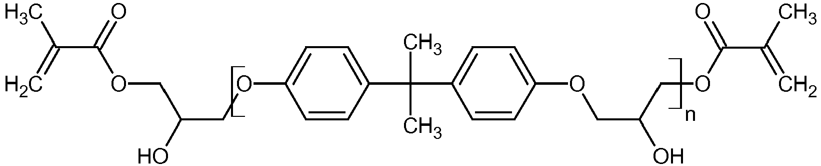 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich).

Beispiele für in besonderen Ausführungsformen der Erfindung nützliche propoxylierte oder insbesondere ethoxylierte aromatische Diol-, wie Bisphenol-A-, Bisphenol-F- oder Novolak-(insbesondere di-)(meth)acrylate sind solche der Formel 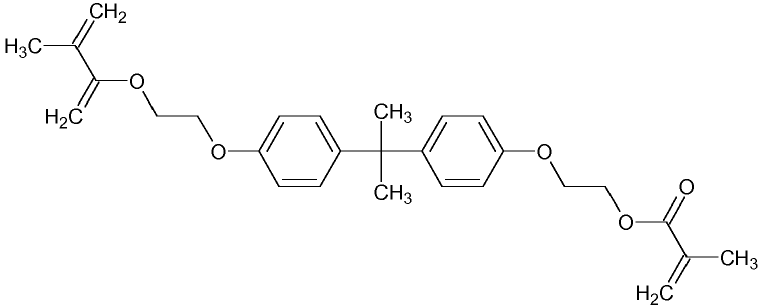 oder allgemein noch unter Berücksichtigung höherer Ethoxylierungsgrade: 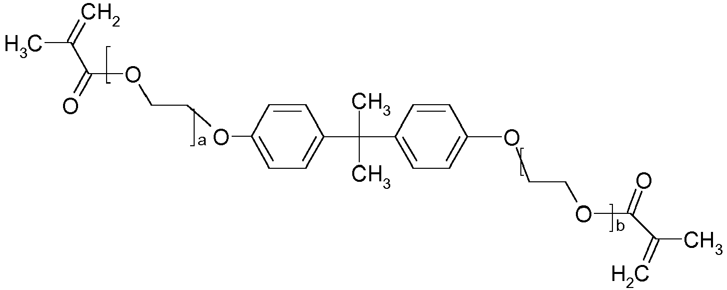 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich).

Das radikalisch härtbare ungesättigte Reaktionsharz (bzw. die Gesamtmenge seiner Komponenten) liegt beispielsweise in einem Gewichtsanteil von 5 bis 99,5 %, wie etwa von 10 bis 98,5, z.B. 10 bis 89,5 %, vor.

"Auf Basis" bedeutet, dass die erfindungsgemäßen oder erfindungsgemäß verwendeten Befestigungsmörtel neben den genannten Komponenten, wie (A) und (B) wie unten definiert, auch weitere übliche Inhaltsstoffe (z.B. Additive oder andere oben oder unten genannte Bestandteile) beinhalten können. Diese weiteren Inhaltsstoffe können zusammen beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Wichtige Beispiele für weitere Inhaltsstoffe sind Beschleuniger, Inhibitoren, reaktive Verdünner, Thixotropiermittel, Füllstoffe und weitere Additive.

Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxymethyl- oder hydroxyethyl)-toluidinen oder-xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxybenzyl)-benzol, (nichtalkylierte oder alkylierte) Brenzcatechine wie tert.-Butylbrenzcatechin, 3,5-Di-tert-butyl-1,2-benzoldiol oder 4-tert.-Butyl-1,2-benzoldiol, oder insbesondere 4-Methoxyphenol, oder Gemische von zwei oder mehr davon, in Frage. Diese haben, bezogen auf die Reaktionsharzformulierung, vorzugsweise einen Anteil von bis zu 1 Gew.-%, insbesondere zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beeinflussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-oxyl-2,2,6,6-tetramethylpiperidin-4-ol ("4-OH-TEMPO"). Der Gewichtsanteil der nicht-phenolischen Inhibitoren liegt vorzugsweise, bezogen auf die Reaktionsharzformulierung, im Bereich von 1 ppm bis 2 Gew.-%, vorzugsweise im Bereich von 10 ppm bis 1 Gew.-%.

Als Thixotropiermittel können übliche thixotropieverursachende Rheologiehilfsmittel verwendet werden, wie pyrogene Kieselsäure. Sie können z.B. in einem Gewichtsanteil von 0,01 bis 50 Gew.-%, beispielsweise von 1 bis 20 Gew.-%, zugesetzt werden.

Als Füllstoffe finden übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon, wobei die Füllstoffe ferner oder insbesondere auch silanisiert sein können, beispielsweise als methacrylsilanbehandeltes Quarzmehl, wie Silbond MST® der Fa. Quarzwerke GmbH, als methacrylsilanbehandelte Kieselerde, wie Aktisil MAM®von Hoffmann Mineral, oder methacryloxypropyltrimethoxysilan-behandelte pyrogene Kieselsäure, wie Aerosil R 711® von Evonik. Die Füllstoffe können in einer oder in mehreren Komponenten eines erfindungsgemäßen Mehrkomponentenkits, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 90 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann, vorzugsweise wird). Zusätzlich oder alternativ können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt sein, wie Weichmacher, nicht reaktive Verdünnungsmittel, Flexibilisatoren, Stabilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Als "reaktive Verdünner" zu bevorzugten Vinylestern können zusätzlich auch andere härtbare ungesättigte, wie olefinische, Verbindungen, beispielsweise ausgewählt aus Mono-, Di-, Tri- oder Poly(meth)acrylaten, wie Hydroxyalkyl(meth)acrylate, wie Hydroxypropylmethacrylat, sonstige (Meth)acrylsäureester, wie (ohne dass diese Aufzählung abschließend sein soll) Acetacetoxyalkyl(meth)acrylat, (Meth)acrylsäuremethylester, 1,4-Butandioldi(meth)acrylat, 1,2-Ethandioldi(meth)acrylat, Diethylglykoldi(meth)acrylat, Trimethylolpropantri(meth)acrylat, oder Polyethylenglykoldi(meth)acrylat; Styrole, wie Styrol, α-Methylstyrol, Vinyltoluol, tert.-Butylstyrol und/oder Divinylbenzol, oder Gemische von zwei oder mehr davon, als mit dem radikalisch härtenden ungesättigten Reaktionsharz parallel aushärtende Bestandteile vorgesehen sein, beispielsweise in einem Gewichtsanteil von 0,1 bis 90 Gew.-%, z.B. zwischen 0,5 und 75 Gew.-% oder zwischen 1 und 40 Gew.-%.

Der Härter beinhaltet mindestens ein Peroxid als eigentlichen Initiator. Der Begriff "Härter" bedeutet dabei vorzugsweise vor- und nachstehend reine Initiatoren oder phlegmatisierte Initiatoren mit oder ohne Füllstoffzusatz und/oder weitere Zusätze, wie Wasser, Verdickungsmittel und/oder weitere Zusatzstoffe, wie Farbstoffe, Additive und dergleichen, mit anderen Worten, die komplette Härterkomponente. Zur Phlegmatisierung können übliche Zusätze, wie Gips, Kreide, pyrogene Kieselsäure, Phthalate, Chlorparaffin oder dergleichen, zugesetzt sein. Daneben können auch noch Füllstoffe und/ oder (insbesondere zur Herstellung einer Paste oder Emulsion) Lösungsmittel, insbesondere Wasser, Verdickungsmittel, Füllstoffe (wie z.B. oben genannte) und weitere der oben genannten Zusätze zugesetzt sein, wobei Wasser als Härter für die Kondensation der hydrolysierbare Gruppen beinhaltenden Silane dienen kann. Der Anteil aller Zusätze kann beispielsweise bei einem Gewichtanteil von insgesamt 0,1 bis 70 Gew.-%, z.B. von 1 bis 40 Gew.-%, liegen.

Bezogen auf die Härterkomponente liegt der Anteil des Initiators in einer möglichen bevorzugten Ausführungsform der Erfindung bei 1 bis 90 Gew.-%, insbesondere bei 5 bis 30 Gew.-%.

Als Initiator für die Härtung der erfindungsgemäßen oder erfindungsgemäß verwendeten Reaktionsharzformulierungen finden im Falle der radikalischen Polymerisation z.B. radikalbildende Peroxide, z.B. organische Peroxide, wie Diacylperoxide, z.B. Dibenzoylperoxid, Ketonperoxide, wie Methylethylketonperoxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäßen oder erfindungsgemäß verwendeten Befestigungsmörtel liegt dabei vorzugsweise, bezogen auf die Masse aller Reaktanden und Zusätze ohne Verpackung, in einem Bereich von 1 bis 60 Gew.-%, z.B. 2 bis 50 Gew.-%, wobei der Anteil an Peroxid, ebenfalls bezogen auf die Masse der gesamten zugehörigen Reaktionsharzformulierung (100 %), insbesondere bei 0,1 oder mehr Gew.-%, vorzugsweise bei 1,5 bis 10 Gew.-%, liegt.

Unter einem Loch oder Spalt ist ein solches Loch oder Spalt zu verstehen, das in einem festen Untergrund, insbesondere Mauerwerk oder Beton, vorhanden und von der Außenseite her zugänglich ist, beispielsweise ein Bohrloch oder ein beim Mörteln mit Zement oder Gips ausgesparter Bereich oder dergleichen.

In einer besonderen Ausführungsform der Erfindung sind das oder die radikalisch härtbaren ungesättigten Reaktionsharze und das oder die erfindungsgemäß zugesetzten, mindestens eine Amino-, sek. Amino-, Mercapto-, Epoxy-, Isocyanato-, Alkenyl-, (Meth)acryloyl- und/oder Anhydrido-Gruppe , insbesondere (Meth)acryloylgruppen, beinhaltenden, und zugleich mindestens eine Si-gebundene hydrolysierbare Gruppe beinhaltenden Silane in einer Komponente A, der Härter in einer Komponente B eines Zwei- Komponentensystems beinhaltet.

Insbesondere handelt es sich um Zwei-Komponentensysteme, in denen das Gewichtsverhältnis von Komponente A zu Komponente B bei 99 : 1 bis 1 : 99, bei 99 : 1 bis 50 : 50, bei 99 : 1 bis 60 : 40 oder bei 99 : 1 bis 70 : 30 liegt.

Komponenten, die sonst unerwünscht miteinander reagieren würden, wie Wasser und die hydrolysierbaren Gruppen der erfindungsgemäß zu verwendenden Silane oder Wasser und Zement, sind dabei vorzugsweise vor dem Einsatz im Loch oder Spalt voneinander getrennt zu halten.

Die erfindungsgemäßen oder erfindungsgemäß verwendeten Befestigungsmörtel können folglich vorzugsweise als Zwei- oder Mehr-Komponentensysteme (Mehrkomponentenkit) vorgesehen sein und auch verwendet werden. Zweikomponentige Systeme sind auch solche, die eine Komponente z.B. in verkapselter Form in der anderen Komponente beinhalten.

Unter einem Mehrkomponentenkit ist insbesondere ein Zweikomponentenkit mit einer Komponente (A), welche ein oder mehrere radikalisch härtbare ungesättigte Verbindungen beinhaltet, wie oben und unten beschrieben, und Härter (Komponente (B), wobei weitere Zusätze in einer oder beider der Komponenten vorgesehen sein können, zu verstehen, worin die miteinander reaktionsfähigen Komponenten (A) und (B) und ggf. weitere separate Komponenten so enthalten sind, dass sie während der Lagerung nicht miteinander reagieren können, vorzugsweise so, dass sie vor der Anwendung nicht miteinander in Berührung kommen, die es jedoch ermöglicht, die Komponenten (A) und (B) (und gegebenenfalls weitere Komponenten) zur Befestigung an der gewünschten Stelle, beispielsweise direkt vor oder in einem Loch, so zu vermischen und erforderlichenfalls einzubringen, dass dort die Härtungsreaktion stattfinden kann. Sehr geeignet sind Patronen (die besonders bevorzugt sind), beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäßen Befestigungsmörtels mit oben und nachstehend genannten Zusammensetzungen zur Aufbewahrung vor der Nutzung enthalten sind, wobei vorzugsweise auch ein Statikmischer zum entsprechenden Kit gehört.

Die Verwendung eines erfindungsgemäßen oder erfindungsgemäß verwendeten Befestigungsmörtels am gewünschten Einsatzort erfolgt durch Mischen der zugehörigen Komponenten, insbesondere nahe bei oder direkt vor einem Loch oder (beispielsweise insbesondere bei Verwendung von Statikmischern oder beim Zerschlagen entsprechender Patronen) innerhalb eines Loches oder Spaltes, z.B. einem Bohrloch.

Unter Einmörteln ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner einem anderen Material, wie Kunststoff oder Holz, in festen Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassaden oder andere Bauelemente befestigt werden.

Die Einbringung des oder der Verankerungsmittel(s) erfolgt vorzugsweise bereits kurze Zeit, vorzugsweise 30 Minuten oder weniger, nach dem Mischen der Komponenten des erfindungsgemäßen Befestigungsmörtels. Zur Erläuterung: Mit der Mischung und Einbringung der Komponenten auf oder in die gewünschten Stellen, an denen Verankerungsmittel befestigt werden sollen, insbesondere Löcher, wie Bohrlöcher, beginnen mehrere, im wesentlichen parallel und/oder nur mit geringer zeitlicher Versetzung ablaufende Reaktionen, insbesondere die Kettenpolymerisation. Die endgültige Aushärtung erfolgt in situ.

Spezifische Ausführungsformen der Verwendung oder der Befestigungsmörtel als solche jeweils gemäß der Erfindung betreffen auch:
(a) Verwendung eines zwei- oder mehrkomponentiger Befestigungsmörtels auf der Basis von einem radikalisch härtenden ungesättigten Reaktionsharz zum Einmörteln von Verankerungsmitteln in Löcher oder Spalten, *dadurch gekennzeichnet,* dass er ein oder mehrere, keine oder mindestens eine Amino-, sek. Amino-, Mercapto-, Epoxy-, Isocyanato-, Alkenyl-, (Meth)acryloyl- und/oder Anhydrido-Gruppe tragende und mindestens eine Si-gebundene hydrolysierbare Gruppe beinhaltende Silane mit absoluten Molekulargewichten von 2000 oder kleiner, die zur Teilnahme an der Polymerisierung mit einem Kunstharz auf Basis radikalisch härtender ungesättigter Reaktionsharze befähigte reaktive Gruppen aufweisen oder nicht und in jedem Falle mindestens eine Si-gebundene hydrolysierbare Gruppe aufweisen, und räumlich getrennt einen Härter beinhaltet.
(b) Verwendung eines Befestigungsmörtels nach Absatz (a), *dadurch gekennzeichnet,* dass er als Silane teilweise oder ausschließlich solche der Formel I beinhaltet, wie oben definiert.
(c) Verwendung eines Befestigungsmörtels nach einem der Absätze (a) oder (b), *dadurch gekennzeichnet,* dass er als Silane teilweise oder ausschließlich solche beinhaltet, die den alpha-Effekt zeigen.
(d) Verwendung eines Befestigungsmörtels nach einem der Absätze (a) bis (c), *dadurch gekennzeichnet,* dass die Silane teilweise oder ausschließlich zur Teilnahme an der Polymerisierung mit einem Kunstharz auf Basis radikalisch härtender Reaktionsharze befähigte reaktive Gruppen (insbesondere ungesättigte Gruppen) aufweisen.
(e) Verwendung eines Befestigungsmörtels nach einem der Absätze (a) bis (d), *dadurch gekennzeichnet,* dass es als Silane teilweise oder ausschließlich solche der Formel II, wie oben definiert, beinhaltet.
(f) Verwendung eines Befestigungsmörtels nach Absatz (e), *dadurch gekennzeichnet,* dass er als Silane teilweise oder ausschließlich solche der Formel II beinhaltet, in denen Y für (Meth)acryloyloxy steht und die übrigen Symbole wie für Formel II definiert sind.
(g) Verwendung eines Befestigungsmörtels nach einem der Absätze (a) bis (f), *dadurch gekennzeichnet,* dass er als Silane teilweise oder ausschließlich solche der Formel III, wie oben definiert, beinhaltet.
(h) Verwendung eines Befestigungsmörtels nach einem der Absätze (a) bis (g), *dadurch gekennzeichnet,* dass als Si-gebundene hydrolysierbare Gruppen in den Silanen ein oder mehrere ausgewählt aus Halogen, Ketoximatgruppen, Amino, Aminoxy, Mercapto, Acyloxy, Aryloxy, Aralkyloxy (= Arylalkoxy) und insbesondere Alkoxy vorhanden sind.
(i) Verwendung eines Befestigungsmörtels nach einem der Absätze (a) bis (h), *dadurch gekennzeichnet,* dass er im Härter Wasser beinhaltet (welches mit den hydrolysierbaren Gruppen der Silane und gegebenenfalls mit Zement oder anderen hydraulisch härtbaren Stoffen reagieren kann).
(j) Verwendung eines Befestigungsmörtels nach einem der Absätze (a) bis (i), *dadurch gekennzeichnet,* dass er in der die radikalisch härtenden ungesättigten Reaktionsharze und die Silane beinhaltenden Komponente hydraulisch härtbare Stoffe wie Zemente (z.B. Portlandzement oder Tonerdeschmelzzemente) beinhaltet.
(k) Verwendung eines Befestigungsmörtels nach einem der Absätze (a) bis (j), *dadurch gekennzeichnet,* dass als Silan 3-Aminopropyltrialkoxysilan, 3-Glycidyloxypropyltrialkoxysilan, Bis-(3-trialkoxysilylpropyl)amin, N-(Alkyl)-3-aminopropyltrialkoxysilan, 3-Mercaptopropyltrialkoxysilan, oder insbesondere 3-(Meth)acryloyl-oxypropyltrialkoxysilan, Alkenyltrialkoxysilan oder Tetraalkoxysilan, oder Alkoxypolysilikat oder Gemische von zwei oder mehr davon, beinhaltet sind.
(l) Verwendung eines Befestigungsmörtels nach einem der Absätze (a) bis (k), *dadurch gekennzeichnet,* dass als Silan teilweise oder nur 3-(Meth)acryloyl-oxypropyltrimethoxysilan, 3-(Meth)acryloyl-oxypropyltriethoxysilan, 3-(Meth)acryloyl-oxymethyltrimethoxysilan, 3-(Meth)acryloyloxymethyltriethoxysilan, Vinyltrimethoxysilan, Vinyltriethoxysilan, oder Tetraethoxysilan, Tetramethoxysilan, Tetrapropoxysilan, oder Ethyl- oder Propylpolysilikat, oder Gemische von zwei oder mehr davon, beinhaltet sind.
(m) Verwendung eines Befestigungsmörtels nach einem der Absätze (a) bis (I), *dadurch gekennzeichnet,* dass als radikalisch härtende ungesättigte Reaktionsharze ein oder mehrere ausgewählt aus (Meth)acrylsäure, Mono-, Di-, Tri- oder Poly(meth)acrylaten , Epoxy(meth)acrylaten, Urethan- und/oder Harnstoff(meth)acrylaten, und ungesättigten Polyesterharzenmit ungesättigter Carbonsäurekomponente, vorzugsweise jeweils propoxylierte oder insbesondere ethoxylierte aromatische Diol-, wie Bisphenol-A-, Bisphenol-F- oder Novolak-(insbesondere di-)(meth)acrylate mit oder ohne Gegenwart reaktiver Verdünner, beinhaltet sind.
(n) Befestigungsmörtel wie in einem der Absätze (a) bis (m) definiert, oder dessen Verwendung, *dadurch gekennzeichnet,* dass als radikalisch härtende ungesättigte Reaktionsharze teilweise oder ausschließlich ein oder mehrere der Formel 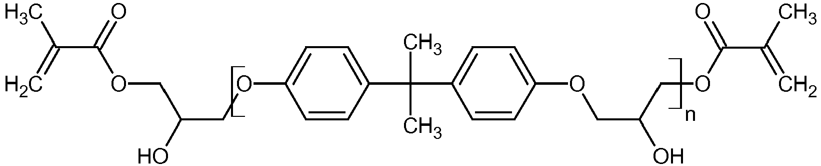 worin n für eine Zahl größer oder gleich 1 steht, wobei, wenn Gemische verschiedener Moleküle mit unterschiedlichen n-Werten vorliegen und durch die Formel repräsentiert werden, auch nicht-ganzzahlige Zahlen als Mittelwert möglich sind; und/oder der Formel 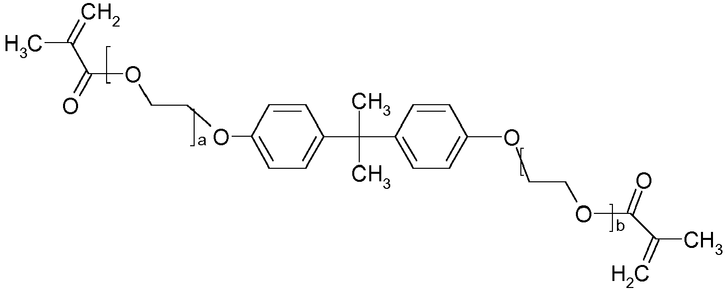 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen a- und b--Werten vorliegen und durch die Formel repräsentiert werden, sind auch nicht-ganzzahlige Zahlen als Mittelwert möglich), beinhaltet sind, vorzugsweise, bezogen auf die gesamte Gewichtsmenge der radikalisch härtenden ungesättigten Reaktionsharze, in einem Anteil von 10 bis 100 Gew.-%, wobei zusätzlich ein oder mehrere reaktive Verdünner ausgewählt aus Mono-, Di-, Tri- oder Poly(meth)acrylaten wie Hydroxyalkyl(meth)acrylaten, Acetacetoxyalkyl(meth)acrylat, Methacrylsäuremethylester, 1,4-Butandioldi(meth)acrylat, 1,2-Ethandioldimethacrylat, Diethylglykoldi(meth)acrylat, Trimethylolpropantri(meth)acrylat oder Polyethylenglykoldi(meth)acrylat; Styrol, α-Methylstyrol, Vinyltoluol, tert.-Butylstyrolund Divinylbenzol, oder Gemischen von zwei oder mehr davon, in einem Gewichtsanteil, bezogen auf die gesamte Gewichtsmenge der radikalisch härtenden Reaktionsharze, von 0 bis 95 Gew.-%, wie von 0,1 bis 80 Gew.-%, von 0,2 bis 70 Gew.-% oder von 0,3 bis 60 Gew.-% beinhaltet sein können.
(o) Verwendung eines Befestigungsmörtels nach einem der Absätze (a) bis (nm, *dadurch gekennzeichnet,* dass es sich um ein Zwei-Komponenten-System handelt, insbesondere in Form einer Zwei-Kammer-Kartusche ohne oder mit Statikmischer oder einer Zwei-Kammer-Patrone (z.B. aus einer äußeren und einer inneren Ampulle).
(p) Verwendung eines Befestigungsmörtels nach einem der Absätze (a) bis (o) zum Einmörteln von Verankerungsmitteln in Löcher oder Spalten, insbesondere in Bohrlöchern, wie feuchten Bohrlöchern, bei dem der Befestigungsmörtel und ein Verankerungsmittel in ein Loch oder einen Spalt eingebracht werden und der Befestigungsmörtel zum Aushärten gebracht wird.
(q) Verfahren (oder Methode) zum Einmörteln von Verankerungselementen und Löchern oder Spalten, bei denen ein Befestigungsmörtel nach einem der Absätze (a) bis (o) zum Einmörteln von Verankerungsmitteln verwendet wird, wobei der Befestigungsmörtel und ein Verankerungsmittel in ein Loch oder einen Spalt eingebracht werden und der Befestigungsmörtel zum Aushärten gebracht wird.
(r) Verwendung oder diese Verwendung beinhaltendes Verfahren, insbesondere nach Absatz p oder Absatz (q), eines Befestigungsmörtels nach einem der Absätze (a) bis (o) zum Einmörteln von Verankerungsmitteln, z.B. handelsüblichen Gewindestangen in der Zugzone, also im gerissenen oder ferner von Einreißen bedrohten Beton.
(s) als Offenbarung für Referenzzwecke Verwendung von Silanen, wie in einem der Absätze (a) bis (o) beinhaltet, zur Verlängerung der Lagerbarkeit eines Befestigungsmörtels nach einem der Absätze (a) bis (o).
(t) Verwendung eines Befestigungsmörtels nach einem der Absätze (a) bis (m) oder (o), oder Befestigungsmörtel nach Absatz (n), dadurch gekennzeichnet, dass er nach dem Aushärten mindestens das Kriterium der Reissfestigkeit im dynamischen Linienriss nach ETAG 01 Part 5 α_{req}. von 0.8 und im dynamischen Linienriss nach ETAG 01 Part 5 von α_{req}. von 0.9 erfüllt.
(u) Verwendung eines Befestigungsmörtels nach einem der Absätze (a) bis (m) oder (o), oder Befestigungsmörtel nach Absatz (n), dadurch gekennzeichnet, dass er eine gegenüber einem silanfreien entsprechenden Befestigungsmörtel bei 120 °C eine um mindestens 10, 20, 50, 100 oder 150 % verlängerte Lagerstabilität aufweist.

Die nachfolgenden Beispiele dienen der Illustration der Erfindung, ohne ihren Umfang einzuschränken. Anteilsangaben erfolgen in Gewichts-% (Gew.-%), bezogen auf die Gesamtmasse der die flüssigen/pastösen Anteile bildenden Komponenten der Gesamtzusammensetzung.

### Beispiel 1: Vergleichsbeispiel (ohne erfindungsgemäßen Silan-Zusatz):

Hier wird ein zweikomponentiges Injektions-Kunstmörtelsystem (mit der Bezeichnung FIS V 360 S (fischerwerke GmbH & Co. KG, Waldachtal, Deutschland)), das folgende Zusammensetzung hat, verwendet:
Komponente (A): Vinylesterharz (ethoxyliertes Bisphenol-A-dimethacrylat), Hydroxypropylmethacrylat, weitere Methacrylsäureester, phenolische Inhibitoren, aminische Beschleuniger, Thixotropiermittel, Portlandzement, Quarzsande, Additive (einschließlich Farbstoffe).
Komponente (B): Dibenzoylperoxid, Wasser, Verdickungsmittel , Füllstoffe (Quarzsand), Additive (einschließlich Farbstoffe).

Die Komponenten werden mit einer handelsüblichen 2-Kammer-Kartusche mit Statikmischer analog den oben für unter Verwendung der Leitlinie von der "European Organisation for Technical Approvals" (EOTA) (2001): ETAG N° 001 Ausgabe November 2006, Leitlinie für die europäische technische Zulassung für Metalldübel zur Verankerung im Beton, Teil 5: Verbunddübel, Februar 2008, unter 5.1.2.1 (b) beschriebenen Bedingungen einem Adhäsionsversagenstest unterzogen und der Mittelwert der Adhäsionsversagenslast aus 5 Versuchen für M12 Bolzen bei einer Verankerungstiefe von 95 mm ermittelt. Dieser beträgt 75 kN. Das Zugmodul, die Zugfestigkeit, die Bruchdehnung und die Druckfestigkeit werden nach den im allgemeinen Teil beschriebenen Normen ermittelt, es ergeben sich folgende Werte:

| Zugmodul [GPa] | Zugfestigkeit [MPa] | Bruchdehnung [%] | Druckfestigkeit [MPa] |
|---|---|---|---|
| 3,7 | 10,6 | 0,8 | 59,4 |

### Beispiele 2 und 3: Befestigungsmörtel mit erfindungsgemäßem Silan-Zusatz

Dem in Beispiel 1 genannten Injektions-Kunstmörtelsystem wurde in Komponente (A), bezogen auf das Gesamtgewicht der Komponenten (A) und (B), jeweils in einem Gewichtsanteil von 5 Gew.-% das in der nachfolgenden Tabelle genannte Silan zugesetzt, woraufhin die ebenfalls in der nachfolgenden Tabelle 1 genannten Adhäsionsversagenslasten gefunden wurden:

**Tabelle 1**

| Beispiel | Zusatz | Durchschnittliche Adhäsionsversagenslast [kN] | Änderung in % |
|---|---|---|---|
| Vergleichsbeispiel 1 | keiner | 75,0 | - |
| Beispiel 2 | 5 % Methacryloxypropyltrimethoxysilan | 101,1 | + 34,8 % |
| Beispiel 3 | 5 % Tetraethoxysilan | 83,7 | + 11,6 % |

Für die Zusammensetzung aus Beispiel 2 (mit den 5 % Methacryloxypropyltrimethoxysilan) werden das Zugmodul, die Zugfestigkeit, die Bruchdehnung und die Druckfestigkeit nach den im allgemeinen Teil beschriebenen Normen ermittelt, es ergeben sich folgende Werte:

| Zugmodul [GPa] | Zugfestigkeit [MPa] | Bruchdehnung [%] | Druckfestigkeit [MPa] |
|---|---|---|---|
| 3,7 | 16,3 | 0,6 | 63,9 |

### Beispiele 4-7: Weitere Befestigungsmörtel mit erfindungsgemäßem Silan-Zusatz:

Dem in Beispiel 1 genannten Injektions-Kunstmörtelsystem wurde in Komponente (A), bezogen auf das Gesamtgewicht der Komponenten (A) und (B), jeweils in einem Gewichtsanteil von 5 Gew.-% das in der nachfolgenden Tabelle 2 genannte Silan zugesetzt:

**Tabelle 2**

| Beispiel | Zusatz |
|---|---|
| Beispiel 4 | 3-Glycidyloxypropyltrimethoxysilan |
| Beispiel 5 | Bis-(3-trimethoxysilylpropyl)amin |
| Beispiel 6 | N-(n-Butyl-3-aminopropyl-trimethoxysilan |
| Beispiel 7 | 3-Mercaptopropyltrimethoxysilan |

### Beispiele 8 bis 13: Kartuschen mit Statikmischer und erfindungsgemäß, verwendetem zweikomponentigen Befestigungsmörteln

Bei Zwei-Kammer-Kartuschen mit einem Gesamtinhalt von 360 ml und einem Mischungsverhältnis von Komponente A : Komponente B gleich 5:1 werden die beiden Kammern jeweils mit Komponente A und Komponente B jeweils eines der Befestigungsmörtel nach jeweils einem der Beispiele 2 bis 7 befüllt, und die Kartuschen werden verschlossen und gemeinsam mit einem Statikmischer FIS S verpackt zu Zwei-Komponenten-Kits.

### Beispiel 14: Lagerstabilität von Patronen

Es werden Patronen M12 mit jeweils Fischer RM Patronenharz (eine Formulierung aus ethoxyliertem Bisphenol-A-dimethacrylat, Hydroxypropylmethacrylat, Butandioldimethacrylat, aminischen Beschleunigern, phenolischen Inhibitoren und Additiven) und Quarzsand sowie zusätzlich mit Silanen befüllt und bei 120 °C gelagert. Es wird halbstündlich geprüft, wann Gelierung auftritt. Die Ergebnisse finden sich in der nachfolgenden Tabelle:

| System | Gelierung [h] |
|---|---|
| fischer RM Patronenharz | 10,5 |
| fischer RM Patronenharz mit 8 % Methacryloxypropyltrimethoxysilan | 64 |
| fischer RM Patronenharz mit 8 % Dynasylan 40 | 39 |

Überraschend wird somit festgestellt, dass sich die Lagerstabilität durch die Zusätze von Silanen bedeutend erhöht.

### Beispiel 15: Risstauglichkeit im statischen und im dynamischen Linienriß:

Für eine Rezeptur entsprechend Beispiel 2 oben wurden die Risstauglichkeit im statischen (Testkriterium nach ETAG 01 Part 5) und im dynamischen Linienriss (Testkriterium nach ETAG 01 Part 5) mit handelsüblichen Gewindestangen überprüft.

Es finden sich gegenüber der silanfreien Rezeptur gemäß Beispiel 1 deutliche Verbesserungen, indem mit der Rezeptur aus Beispiel 1 die erforderlichen Prüfkriterien der ETAG 01 Part 5 für Versuche im gerissenen Beton nicht erfüllt werden - weder im statischen noch im dynamischen Linienriss werden die α_{req}.von 0,8 beziehungsweise 0,9 erreicht. Dagegen werden die zur Erfüllung der Prüfkriterien erforderlichen α_{req}. beispielsweise mit einer silanhaltigen Zusammensetzung gemäß Beispiel 2 erreicht.

## Patentansprüche

1. Verwendung eines Befestigungsmörtels zum Ein¬mörteln von Verankerungsmitteln in Löcher oder Spalten, bei dem der Befestigungsmörtel und ein Verankerungsmittel in ein Loch oder einen Spalt eingebracht werden und der Befestigungsmörtel zum Aushärten gebracht wird, wobei es sich bei dem Befestigungsmörtel um einen zwei- oder mehrkomponentigen Befestigungsmörtel auf der Basis von einem radikalisch härtenden ungesättigten Reaktionsharz handelt, welcher ein oder mehrere, keine oder mindestens eine Amino-, sek. Amino-, Mercapto-, Epoxy-, Isocyanato-, Alkenyl-, (Meth)acryloyl- und/oder Anhydrido-Gruppe tragende und mindestens eine Si-gebundene hydrolysierbare Gruppe beinhaltende Silane mit absoluten Molekulargewichten von 2000 oder kleiner, die zur Teilnahme an der Polymerisierung mit einem Kunstharz auf Basis radikalisch härtender ungesättigter Reaktionsharze befähigte reaktive Gruppen aufweisen oder nicht und in jedem Falle Si-gebundene hydrolysierbare Gruppen aufweisen, und räumlich getrennt einen Härter beinhaltet.

2. Verwendung nach Anspruch 1, ***dadurch gekennzeichnet,* dass** der Befestigungsmörtel als Silane teilweise oder ausschließlich solche der Formel I beinhaltet,
[R₁-X-(CH₂)ₙ-]ₚ-Si(R^{B})_{q}(L)ₜ (I)
worin
X für S oder NH oder O oder NCO oder nichts steht; wobei X nichts ist, wenn R₁ für Anhydrido steht;
R₁ für nichts, Wasserstoff, Cycloalkyl, Alkyl, Aminoalkyl, Epoxyalkyl, (Meth)acryloyl, Aryl, Aralkyl, Acyl, Heterocyclyl oder für einen Rest der Formel -[(CH₂)_{n*}]_{p*}-Si(R^{B*})_{3-t*}(L*)_{t*} steht, worin, jeweils unabhängig vom anderen Rest, R^{B}* die nachfolgend für R^{B} genannten Bedeutungen , L* die nachfolgend für L genannten Bedeutungen und n*, p* und t* jeweils die nachfolgend genannten Bedeutungen haben;
wobei R₁ Wasserstoff ist, wenn X für S steht; wobei X für O steht wenn R₁ Epoxyalkyl oder (Meth)acryloyl ist; wobei R₁ nichts ist, wenn X für NCO steht;
R^{B} unabhängig voneinander für eine Alkyl-, Alkenyl-, Arylalkyl- oder Arylgruppe steht, vorzugsweise für Alkyl oder Alkenyl,
L für einen hydrolysierbaren Rest, insbesondere Alkoxy, steht,
n und, falls vorhanden, n* unabhängig voneinander für eine positive ganze Zahl, insbesondere 1 bis 10, stehen;
p für 0 bis 3 steht und, falls vorhanden, p* unabhängig für 1 bis 3 steht;
q für 0 bis 2 steht; und
t für 1 bis 4 steht und, falls vorhanden, t* unabhängig für 1 bis 3 steht,
mit der Maßgabe, dass gilt: p + q + t = 4 und, falls vorhanden, p* + (3-t*) + t* = 4.

3. Verwendung nach einem der Ansprüche 1 oder 2, ***dadurch gekennzeichnet,* dass** es sich bei den Silanen des Befestigungsmörtels mindestens teilweise auch um solche handelt, die den alpha-Effekt zeigen.

4. Verwendung nach einem der Ansprüche 1 bis 3, ***dadurch gekennzeichnet,* dass** die Silane des Befestigungsmörtels teilweise oder ausschließlich zur Teilnahme an der Polymerisierung mit einem Kunstharz auf Basis radikalisch härtender ungesättigter Reaktionsharze befähigte reaktive Gruppen aufweisen.

5. Verwendung nach einem der Ansprüche 1 bis 3, ***dadurch gekennzeichnet,* dass** der Befestigungsmörtel als Silane teilweise oder ausschließlich solche der Formel III beinhaltet,
Si(R^{B})₄₋ₜ(L)ₜ (III)
worin R^{B} unabhängig voneinander für eine Alkyl-, Alkenyl-, Arylalkyl- oder Arylgruppe steht, vorzugsweise für Alkyl oder Alkenyl,
L für einen hydrolysierbaren Rest, insbesondere Alkoxy, steht,
und
t für 1 bis 4 steht.

6. Verwendung nach einem der Ansprüche 1 bis 5, ***dadurch gekennzeichnet,* dass** als Si-gebundene hydrolysierbare Gruppen in den Silanen ein oder mehrere ausgewählt aus Halogen, Ketoximatgruppen, Amino, Aminoxy, Mercapto, Acyloxy, Aryloxy, Aralkyloxy und insbesondere Alkoxy vorhanden sind.

7. Verwendung nach einem der Ansprüche 1 bis 6, ***dadurch gekennzeichnet,* dass** der Befestigungsmörtel im Härter Wasser beinhaltet.

8. Verwendung nach einem der Ansprüche 1 bis 7, ***dadurch gekennzeichnet,* dass** der Befestigungsmörtel in der die radikalisch härtenden ungesättigten Reaktionsharze und die Silane beinhaltenden Komponente Zemente beinhaltet.

9. Verwendung nach einem der Ansprüche 1 bis 8, ***dadurch gekennzeichnet,* dass** im Befestigungsmörtel als Silan 3-Aminopropyltrialkoxysilan, 3-Glycidyloxypropyltrialkoxysilan, Bis-(3-trialkoxysilylpropyl)amin, N-(Alkyl)-3-aminopropyltrialkoxysilan, 3-Mercaptopropyltrialkoxysilan, oder insbesondere 3-(Meth)acryloyl-oxypropyltrialkoxysilan, Alkenyltrialkoxysilan oder Tetraalkoxysilan oder Alkoxypolysilikat, oder Gemische von zwei oder mehr davon, beinhaltet sind.

10. Verwendung nach einem der Ansprüche 1 bis 9, ***dadurch gekennzeichnet,* dass** im Befestigungsmörtel als Silan teilweise oder nur 3-(Meth)acryloyl-oxypropyltrimethoxysilan, 3-(Meth)acryloyl-oxypropyltriethoxysilan, 3-(Meth)acryloyl-oxymethyltrimethoxysilan, 3-(Meth)acryloyloxymethyltriethoxysilan, Vinyltrimethoxysilan, Vinyltriethoxysilan oder Tetraethoxysilan, Tetramethoxysilan, Tetrapropoxysilan oder Ethyl- oder Propylpolysilikat, oder Gemische von zwei oder mehr davon, beinhaltet sind.

11. Verwendung nach einem der Ansprüche 1 bis 10, ***dadurch gekennzeichnet,* dass** im Befestigungsmörtel als radikalisch härtende ungesättigte Reaktionsharze teilweise oder ausschließlich ein oder mehrere ausgewählt aus Acrylsäure, Methacrylsäure, Mono-, Di-, Tri- oder Poly(meth)acrylaten oder -methacrylaten, Epoxy(meth)acrylaten, Urethan- oder Harnstoff(meth)acrylaten und ungesättigten Polyesterharzen mit ungesättigter Carbonsäurekomponente, mit oder ohne Gegenwart reaktiver Verdünner, beinhaltet sind.

12. Befestigungsmörtel zur Verwendung nach Anspruch 1, ***dadurch gekennzeichnet,* dass** es sich bei dem Befestigungsmörtel um einen zwei- oder mehrkomponentigen Befestigungsmörtel auf der Basis von einem radikalisch härtenden ungesättigten Reaktionsharz handelt, welcher ein oder mehrere, keine oder mindestens eine Amino-, sek. Amino-, Mercapto-, Epoxy-, Isocyanato-, Alkenyl-, (Meth)acryloyl- und/oder Anhydrido-Gruppe tragende und mindestens eine Si-gebundene hydrolysierbare Gruppe beinhaltende Silane mit absoluten Molekulargewichten von 2000 oder kleiner, die zur Teilnahme an der Polymerisierung mit einem Kunstharz auf Basis radikalisch härtender ungesättigter Reaktionsharze befähigte reaktive Gruppen aufweisen oder nicht und in jedem Falle Si-gebundene hydrolysierbare Gruppen aufweisen, und räumlich getrennt einen Härter beinhaltet, wobei als radikalisch härtende ungesättigte Reaktionsharze teilweise oder ausschließlich ein oder mehrere der Formel 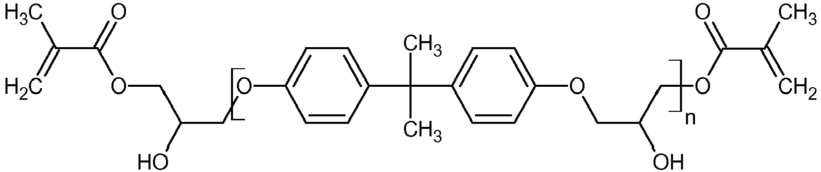 worin n für eine Zahl größer oder gleich 1 steht, wobei, wenn Gemische verschiedener Moleküle mit unterschiedlichen n-Werten vorliegen und durch die Formel repräsentiert werden, auch nicht-ganzzahlige Zahlen als Mittelwert möglich sind; und/oder
der Formel 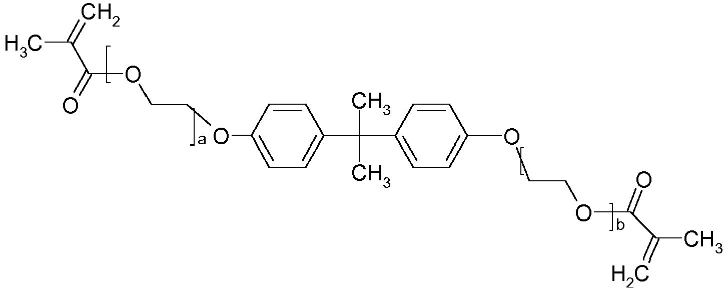 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind, wobei, wenn Gemische verschiedener Moleküle mit unterschiedlichen a- und b-Werten vorliegen und durch die Formel repräsentiert werden, sind auch nicht-ganzzahlige Zahlen als Mittelwert möglich sind, beinhaltet sind.

13. Befestigungsmörtel nach Anspruch 12, wobei, bezogen auf die gesamte Gewichtsmenge der radikalisch härtenden ungesättigten Reaktionsharze, die radikalisch härtenden Reaktionsharze in einem Anteil von 10 bis 100 Gew.-% vorliegen und wobei zusätzlich ein oder mehrere reaktive Verdünner ausgewählt aus Hydroxyalkyl(meth)acrylaten, Acetacetoxyalkyl(meth)acrylat, (Meth)acrylsäuremethylester, 1,4-Butandioldi(meth)acrylat, 1,2-Ethandioldi(meth)acrylat, Diethylglykoldi(meth)acrylat, Trimethylolpropantri(meth)acrylat, Polyethylenglykoldi(meth)acrylat,; Styrol, α-Methylstyrol, Vinyltoluol, tert-Butylstyrol und Divinylbenzol, oder Gemischen von zwei oder mehr davon, in einem Gewichtsanteil, bezogen auf die gesamte Gewichtsmenge der radikalisch härtenden Reaktionsharze, von 0 bis 90 Gew.-% beinhaltet sein können.

14. Verwendung nach einem der Ansprüche 1 bis 11 oder Befestigungsmörtel nach Anspruch 12 oder 13, ***dadurch gekennzeichnet,* dass** es sich bei dem Befestigungsmörtel um ein Zwei-Komponenten-System handelt, insbesondere in Form einer Zwei-Kammer-Kartusche ohne oder mit Statikmischer oder einer Zwei-Kammer-Patrone.

15. Verwendung nach einem der Ansprüche 1 bis 11 oder Befestigungsmörtel nach einem der Ansprüche 12 oder 13 zum Einmörteln der Verankerungsmittel in der Zugzone, also im gerissenen oder von Einreißen bedrohten Beton.

16. Verfahren zum Einmörteln von Verankerungselementen und Löchern oder Spalten, bei denen ein Befestigungsmörtel wie in einem der Ansprüche 1 bis 13 definiert zum Einmörteln von Verankerungsmitteln verwendet wird, wobei der Befestigungsmörtel und ein Verankerungsmittel in ein Loch oder einen Spalt eingebracht werden und der Befestigungsmörtel zum Aushärten gebracht wird.

## Claims

1. Use of a fixing mortar for embedding anchoring means in mortar in holes or crevices, in which the fixing mortar and an anchoring means are introduced into a hole or crevice and the fixing mortar is caused to cure, wherein the fixing mortar is a two-component or multi-component fixing mortar, based on a free-radical-hardening unsaturated reactive resin which includes one or more silanes having absolute molecular weights of 2000 or less that carry no or at least one amino, sec-amino, mercapto, epoxy, isocyanato, alkenyl, (meth)acryloyl and/or anhydrido group(s) and include at least one Si-bonded hydrolysable group and which may or may not have reactive groups capable of participating in the polymerisation with a synthetic resin based on free-radical-hardening unsaturated reactive resins but do in any case have Si-bonded hydrolysable groups, and, physically separate therefrom, a hardener.

2. Use according to claim 1, ***characterised in that*** the fixing mortar includes as silanes partly or solely those of formula I
[R₁-X-(CH₂)ₙ-]ₚ-Si(R^{B})_{q}(L)ₜ (I)
wherein
X denotes S or NH or O or NCO or nothing; with X being nothing when R₁ denotes anhydrido;
R₁ denotes nothing, hydrogen, cycloalkyl, alkyl, aminoalkyl, epoxyalkyl, (meth)acryloyl, aryl, aralkyl, acyl, heterocyclyl or a radical of formula -[(CH₂)_{n*}]_{p*}-Si(R^{B*})_{3-t*}(L*)_{t*}, wherein, in each case independently of the other radical, R^{B}* is as defined below for R^{B}, L* is as defined below for L and n*, p* and t* are in each case as defined below; with R₁ being hydrogen when X denotes S; with X being O when R₁ is epoxyalkyl or (meth)acryloyl; with R₁ being nothing when X denotes NCO;
R^{B}, independently of any other, denotes an alkyl, alkenyl, arylalkyl or aryl group, preferably alkyl or alkenyl,
L denotes a hydrolysable radical, especially alkoxy,
n and, if present, n* independently of one another denote a positive integer, especially from 1 to 10;
p denotes from 0 to 3 and, if present, p* independently denotes from 1 to 3;
q denotes from 0 to 2; and
t denotes from 1 to 4 and, if present, t* independently denotes from 1 to 3,
with the proviso that p + q + t = 4 and, if present, p* + (3-t*) + t* = 4.

3. Use according to either one of claims 1 and 2, ***characterised in that*** the silanes of the fixing mortar are at least partly also those exhibiting the alpha effect.

4. Use according to any one of claims 1 to 3, ***characterised in that*** the silanes of the fixing mortar have partly or solely reactive groups capable of participating in the polymerisation with a synthetic resin based on free-radical-hardening unsaturated reactive resins.

5. Use according to any one of claims 1 to 3, ***characterised in that*** the fixing mortar includes as silanes partly or solely those of formula III
Si(R^{B})₄₋ₜ(L)ₜ (III)
wherein R^{B} denotes, independently of any other(s), an alkyl, alkenyl, arylalkyl or aryl group, preferably alkyl or alkenyl,
L denotes a hydrolysable radical, especially alkoxy,
and
t denotes from 1 to 4.

6. Use according to any one of claims 1 to 5, ***characterised in that*** as Si-bonded hydrolysable groups in the silanes there are present one or more selected from halogen, ketoximate groups, amino, aminoxy, mercapto, acyloxy, aryloxy, aralkyloxy and especially alkoxy.

7. Use according to any one of claims 1 to 6, ***characterised in that*** the fixing mortar includes water in the hardener.

8. Use according to any one of claims 1 to 7, ***characterised in that*** the fixing mortar includes cements in the component that includes the free-radical-hardening unsaturated reactive resins and the silanes.

9. Use according to any one of claims 1 to 8, ***characterised in that*** as silane in the fixing mortar there are included 3-aminopropyl-trialkoxysilane, 3-glycidyloxypropyl-trialkoxysilane, bis(3-trialkoxysilylpropyl)amine, N-(alkyl)-3-aminopropyl-trialkoxysilane, 3-mercaptopropyl-trialkoxysilane, or especially 3-(meth)acryloyl-oxypropyl-trialkoxysilane, alkenyl-trialkoxysilane or tetraalkoxysilane, or alkoxy polysilicate or mixtures of two or more thereof.

10. Use according to any one of claims 1 to 9, ***characterised in that*** as silane in the fixing mortar there are included partly or only 3-(meth)acryloyl-oxypropyl-trimethoxysilane, 3-(meth)acryloyl-oxypropyl-triethoxysilane, 3-(meth)acryloyl-oxymethyl-trimethoxysilane, 3-(meth)acryloyloxymethyl-triethoxysilane, vinyltrimethoxysilane, vinyltriethoxysilane or tetraethoxysilane, tetramethoxysilane, tetrapropoxysilane or ethyl or propyl polysilicate, or mixtures of two or more thereof.

11. Use according to any one of claims 1 to 10, ***characterised in that*** as free-radical-hardening unsaturated reactive resins in the fixing mortar there are included partly or solely one or more selected from acrylic acid, methacrylic acid, mono-, di-, tri- or poly-(meth)acrylates or -methacrylates, epoxy(meth)acrylates, urethane- or urea-(meth)-acrylates and unsaturated polyester resins having an unsaturated carboxylic acid component, with or without the presence of reactive diluents.

12. Fixing mortar for use according to claim 1, ***characterised in that*** the fixing mortar is a two-component or multi-component fixing mortar based on a free-radical-hardening unsaturated reactive resin which includes one or more silanes having absolute molecular weights of 2000 or less that carry no or at least one amino, sec-amino, mercapto, epoxy, isocyanato, alkenyl, (meth)acryloyl and/or anhydrido group(s) and include at least one Si-bonded hydrolysable group and which may or may not have reactive groups capable of participating in the polymerisation with a synthetic resin based on free-radical-hardening unsaturated reactive resins but do in any case have Si-bonded hydrolysable groups, and, physically separate therefrom, a hardener, wherein as free-radical-hardening unsaturated reactive resins there are included partly or solely one or more of formula 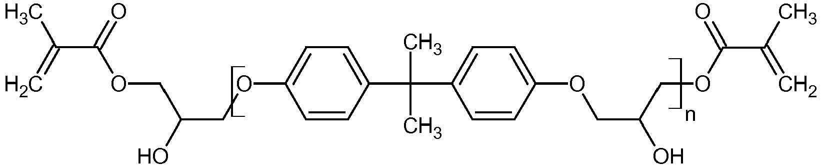 wherein n denotes a number greater than or equal to 1, but when mixtures of different molecules having different n values are present and are represented by the formula, non-integer numbers are also possible as a mean value; and/or
of formula 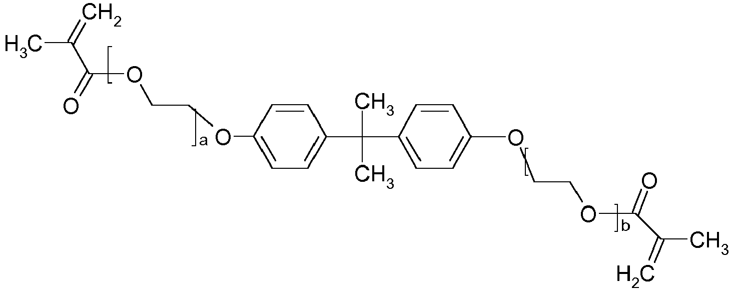 wherein a and b each independently of the other denote a number greater than or equal to 0, with the proviso that preferably at least one of the values is greater than 0, preferably both values being 1 or more, with non-integer numbers also being possible as a mean value when mixtures of different molecules having different a and b values are present and are represented by the formula.

13. Fixing mortar according to claim 12, wherein, based on the total amount by weight of the free-radical-hardening unsaturated reactive resins, the free-radical hardening reactive resins are present in a proportion of from 10 to 100 % by weight, and wherein there may be additionally included one or more reactive diluents selected from hydroxyalkyl (meth)acrylates, acetacetoxyalkyl (meth)acrylate, (meth)acrylic acid methyl ester, 1,4-butanediol di(meth)acrylate, 1,2-ethanediol di(meth)acrylate, diethyl glycol di(meth)acrylate, trimethylolpropane tri(meth)acrylate, polyethylene glycol di(meth)acrylate; styrene, α-methyl styrene, vinyl toluene, tert-butyl styrene and divinyl benzene, or mixtures of two or more thereof, in a proportion by weight, based on the total amount by weight of the free-radical-hardening reactive resins, of from 0 to 90 % by weight.

14. Use according to any one of claims 1 to 11 or fixing mortar according to claim 12 or 13, ***characterised in that*** the fixing mortar is a two-component system, especially in the form of a two-chamber cartridge without or with a static mixer or a two-chamber capsule.

15. Use according to any one of claims 1 to 11 or fixing mortar according to either one of claims 12 and 13 for embedding anchoring means in mortar in the tension zone, that is to say in cracked concrete or concrete at risk of cracking.

16. Process for embedding anchoring elements in mortar in holes or crevices, in which a fixing mortar as defined in any one of claims 1 to 13 is used for embedding anchoring means in mortar, the fixing mortar and an anchoring means being introduced into a hole or crevice and the fixing mortar being caused to cure.

## Revendications

1. Utilisation d'un mortier de fixation pour le scellement dans le mortier de moyens d'ancrage dans des trous ou des fentes, selon laquelle le mortier de fixation et un moyen d'ancrage sont introduits dans un trou ou une fente et le mortier de fixation est amené à durcir, le mortier de fixation étant un mortier de fixation à deux composants ou plus à base d'une résine réactive insaturée durcissant par voie radicalaire, qui contient un ou plusieurs silanes portant aucun ou au moins un groupe amino, amino secondaire, mercapto, époxy, isocyanato, alcényle, (méth)acryloyle et/ou anhydrido et contenant au moins un groupe hydrolysable lié au Si, présentant des poids moléculaires absolus inférieurs ou égaux à 2000, qui présentent ou non des groupes réactifs aptes à participer à la polymérisation avec une résine synthétique à base de résines réactives insaturées durcissant par voie radicalaire et qui présentent dans chaque cas des groupes hydrolysables liés au Si, et, physiquement séparé, un agent de durcissement.

2. Utilisation selon la revendication 1, **caractérisée en ce que** le mortier de fixation contient, comme silanes, en partie ou exclusivement ceux de formule I,
[R₁-X-(CH₂)ₙ-]ₚ-Si(R^{B})_{q}(L)ₜ (I)
dans laquelle
X représente S ou NH ou O ou NCO ou est absent ; X étant absent lorsque R₁ représente anhydrido ;
R₁ est absent, représente hydrogène, cycloalkyle, alkyle, aminoalkyle, époxyalkyle, (méth)acryloyle, aryle, aralkyle, acyle, hétérocyclyle ou un radical de formule -[(CH₂)_{n*}]ₚ-Si(R^{B})_{3-t*}(L*)_{t*}, dans laquelle, à chaque fois indépendamment de l'autre radical, R^{B}* possède les significations suivantes indiquées pour R^{B}, L* possède les significations suivantes indiquées pour L, et n*, p* et t* possèdent à chaque fois les significations indiquées ci-dessous ;
R₁ étant hydrogène, lorsque X représente S ; X représentant O lorsque R₁ est époxyalkyle ou (méth)acryloyle ; R₁ étant absent lorsque X représente NCO ;
R^{B} représente indépendamment l'un de l'autre un groupe alkyle, alcényle, arylalkyle ou aryle, de préférence alkyle ou alcényle,
L représente un radical hydrolysable, en particulier alcoxyle,
n et, le cas échéant, n* représentent indépendamment l'un de l'autre un nombre entier positif, en particulier 1 à 10 ;
p représente 0 à 3 et, le cas échéant, p* représente indépendamment 1 à 3 ;
q représente 0 à 2 ; et
t représente 1 à 4 et, le cas échéant, t* représente indépendamment 1 à 3 ;
étant entendu que s'applique : p + q + t = 4 et, le cas échéant, p* + (3 - t*) + t* = 4.

3. Utilisation selon l'une quelconque des revendications 1 ou 2, **caractérisée en ce que** les silanes du mortier de fixation sont au moins en partie ceux qui présentent l'effet alpha.

4. Utilisation selon l'une quelconque des revendications 1 à 3, **caractérisée en ce que** les silanes du mortier de fixation présentent, en partie ou exclusivement, des groupes réactifs aptes à participer à la polymérisation avec une résine synthétique à base de résines réactives insaturées durcissant par voie radicalaire.

5. Utilisation selon l'une quelconque des revendications 1 à 3, **caractérisée en ce que** le mortier de fixation contient, comme silanes, en partie ou exclusivement ceux de formule III,
Si(R^{B})₄₋ₜ(L)ₜ (III)
dans laquelle R^{B} représente indépendamment l'un de l'autre un groupe alkyle, alcényle, arylalkyle ou aryle, de préférence alkyle ou alcényle,
L représente un radical hydrolysable, en particulier alcoxyle,
et t représente 1 à 4.

6. Utilisation selon l'une quelconque des revendications 1 à 5, **caractérisée en ce que** comme groupes hydrolysables liés au Si dans les silanes, un ou plusieurs composés choisis parmi halogène, groupes cétoximate, amino, aminoxyle, mercapto, acyloxyle, aryloxyle, aralkyloxyle et en particulier alcoxyle, sont présents.

7. Utilisation selon l'une quelconque des revendications 1 à 6, **caractérisée en ce que** le mortier de fixation contient de l'eau dans l'agent de durcissement.

8. Utilisation selon l'une quelconque des revendications 1 à 7, **caractérisée en ce que** le mortier de fixation contient des ciments dans les composants contenant les résines réactives insaturées durcissant par voie radicalaire et les silanes.

9. Utilisation selon l'une quelconque des revendications 1 à 8, **caractérisée en ce que**, comme silane, un 3-aminopropyltrialcoxysilane, un 3-glycidyloxypropyltrialcoxysilane, une bis-(3-trialcoxysilylpropyl)amine, une N-(alkyl)-3-aminopropyltrialcoxysilane, un 3-mercaptopropyltrialcoxysilane, ou en particulier un 3-(méth)acryloyl-oxypropyltrialcoxysilane, un alcényltrialcoxysilane ou un tétraalcoxysilane ou un alcoxypolysilicate, ou des mélanges de deux ou plus de ceux-ci, sont contenus dans le mortier de fixation.

10. Utilisation selon l'une quelconque des revendications 1 à 9, **caractérisée en ce que** comme silane, en partie ou uniquement le 3-(méth)acryloyl-oxypropyltriméthoxysilane, le 3-(méth)acryloyl-oxypropyltriéthoxysilane, le 3-(méth)acryloyl-oxyméthyltriméthoxysilane, le 3-(méth)acryloyloxyméthyltriéthoxysilane, le vinyltriméthoxysilane, le vinyltriéthoxysilane ou le tétraéthoxysilane, le tétraméthoxysilane, le tétrapropoxysilane ou l'éthylpolysilicate ou le propylpolysilicate ou des mélanges de deux ou plus de ceux-ci, sont contenus dans le mortier de fixation.

11. Utilisation selon l'une quelconque des revendications 1 à 10, **caractérisée en ce que**, comme résines réactives insaturées durcissant par voie radicalaire, en partie ou exclusivement un ou plusieurs composés parmi l'acide acrylique, l'acide méthacrylique, des mono-, di, tri- ou poly(méth)acrylates ou -méthacrylates, des époxy(méth)acrylates, des uréthane-(méth)acrylates ou des urée-(méth)acrylates et des résines de polyesters insaturées comportant un composant d'acide carboxylique insaturé, en présence ou en absence de diluants réactifs, sont contenus dans le mortier de fixation.

12. Mortier de fixation pour une utilisation selon la revendication 1, **caractérisé en ce que** le mortier de fixation est un mortier de fixation à deux composants ou plus, à base d'une résine réactive insaturée durcissant par voie radicalaire, qui contient un ou plusieurs silanes portant aucun ou au moins un groupe amino, amino secondaire, mercapto, époxy, isocyanato, alcényle, (méth)acryloyle et/ou anhydrido et contenant au moins un groupe hydrolysable lié au Si, présentant des poids moléculaires absolus inférieurs ou égaux à 2000, qui présentent ou non des groupes réactifs aptes à participer à la polymérisation avec une résine synthétique à base de résine réactive insaturée durcissant par voie radicalaire et qui présentent dans chaque cas des groupes hydrolysables liés au Si, et, physiquement séparé, un agent de durcissement, qui contient, comme résines réactives insaturées durcissant par voie radicalaire, en partie ou exclusivement une ou plusieurs résines de formule 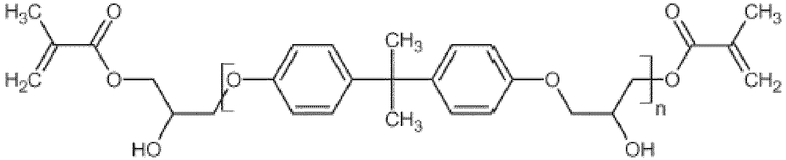 dans laquelle n représente un nombre supérieur ou égal à 1, où, lorsque des mélanges de diverses molécules comportant des valeurs de n différentes sont présents et sont représentés par la formule, des nombres non entiers sont possibles, comme moyenne ; et/ou de formule 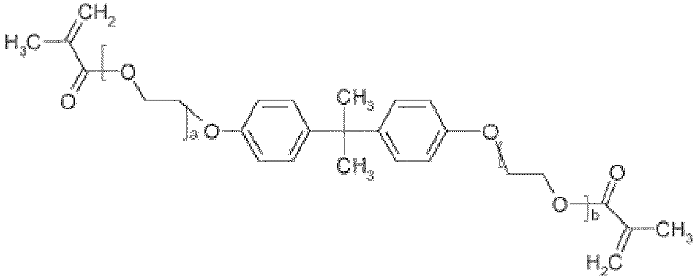 dans laquelle a et b représentent à chaque fois indépendamment l'un de l'autre un nombre supérieur ou égal à 0, étant entendu que de préférence au moins une des valeurs est supérieure à 0, de préférence toutes les deux sont égales ou supérieures à 1, où, lorsque des mélanges de diverses molécules comportant des valeurs différentes de a et de b sont présents et sont représentés par la formule, des nombres non entiers sont possibles, comme moyenne.

13. Mortier de fixation selon la revendication 12, les résines réactives durcissant par voie radicalaire étant présentes en une proportion de 10 à 100 % en poids, par rapport à la quantité totale en poids des résines réactives insaturées durcissant par voie radicalaire et un ou plusieurs diluants réactifs choisis parmi les hydroxyalkyl(méth)acrylates, les acétacétoxyalkyl(méth)acrylates, le (méth)acrylate de méthyle, le di(méth)acrylate de 1,4-butanediol, le di(méth)acrylate de 1,2-éthanediol, le di(méth)acrylate de diéthylglycol, le tri(méth)acrylate de triméthylolpropane, le di(méth)acrylate de polyéthylèneglycol ; le styrène, l'α-méthylstyrène, le vinyltoluène, le tert-butylstyrène et le divinylbenzène, ou des mélanges de deux ou plus de ceux-ci, en une partie en poids, par rapport à la quantité totale en poids des résines réactives durcissant par voie radicalaire, de 0 à 90 % en poids, pouvant être contenus.

14. Utilisation selon l'une quelconque des revendications 1 à 11 ou mortier de fixation selon la revendication 12 ou 13, caractérisé(e) en ce que le mortier de fixation est un système à deux composants, en particulier sous forme d'une cartouche à deux chambres avec ou sans mélangeur statique ou d'une cartouche à deux chambres.

15. Utilisation selon l'une quelconque de revendications 1 à 11 ou mortier de fixation selon l'une des revendications 12 et 13, pour le scellement dans le mortier des moyens d'ancrage dans la zone tendue, c'est-à-dire dans le béton fissuré ou menacé de rupture.

16. Procédés pour le scellement dans le mortier d'éléments d'ancrage et de trous ou de fentes, dans lesquels un mortier de fixation tel que défini selon l'une quelconque des revendications 1 à 13 est utilisé pour le scellement dans le mortier de moyens d'ancrage, le mortier de fixation et un moyen d'ancrage étant introduits dans un trou ou une fente et le mortier de fixation étant amené à durcir.
